# EUROPÄISCHE PATENTSCHRIFT

(11) **EP 3 160 319 B1**
(45) Veröffentlichungstag und Bekanntmachung des Hinweises auf die Patenterteilung: **15.04.2020**
(21) Anmeldenummer: 15727389.7
(22) Anmeldetag: 03.06.2015
(51) Int. Cl.: B60L 53/30, B60L 53/35, B60L 53/36, A01D 34/00, G05D 1/02

(54) **AUTONOMES ARBEITSGERÄT**
AUTONOMOUS WORK DEVICE
APPAREIL DE TRAVAIL AUTONOME

(30) Priorität: 27.06.2014 DE 102014212408
(43) Veröffentlichungstag der Anmeldung: 03.05.2017
(73) Patentinhaber: Robert Bosch GmbH, 70442 Stuttgart (DE)
(72) Erfinder: BIBER, Peter, 72119 Poltringen (DE); MARX, Klaus, 70563 Stuttgart (DE); PETEREIT, Steffen, 71691 Freiberg A. N. (DE); HENSEL, Stefan, 77836 Rheinmuenster (DE)
(86) Internationale Anmeldenummer: PCT/EP2015/062403
(87) Internationale Veröffentlichungsnummer: WO 2015/197332

(56) Entgegenhaltungen:
- CA-A1- 2 317 533
- US-A1- 2007 050 086
- US-A1- 2008 004 751
- US-A1- 2008 049 217
- US-A1- 2011 234 153
- US-A1- 2012 265 391

## Beschreibung

### Stand der Technik

Es ist bereits ein autonomes Arbeitsgerät nach dem Oberbegriff des Anspruchs 1 vorgeschlagen worden.

Dokument US2008/004751 beschreibt ein Reinigungsrobotersystem zum Reinigen eines vorgegebenen Bereichs.

### Offenbarung der Erfindung

Die Erfindung geht aus von einem autonomen Arbeitsgerät, insbesondere von einem autonomen Rasenmäher, mit zumindest einer von einer Einfassungsdrahtorientierungsvorrichtung verschiedenen Orientierungsvorrichtung, die zu einer Orientierung innerhalb eines Bearbeitungsbereichs vorgesehen ist, und mit zumindest einer Steuer- und/oder Regeleinheit zu einer Ermittlung einer Fahrstrategie.

Es wird vorgeschlagen, dass die zumindest eine Steuer- und/oder Regeleinheit zumindest dazu vorgesehen ist, eine Ausrichtung relativ zu einer Basisstation zu einem gezielten Andocken an eine Schnittstelle, insbesondere eine Ladeschnittstelle, der Basisstation in Abhängigkeit von zumindest einer mittels der zumindest einen Orientierungsvorrichtung erfassten Orientierungskenngröße zu ermitteln. Die Schnittstelle kann als Ladeschnittstelle, als Hilfsstoffbetankungsschnittstelle oder als andere, einem Fachmann als sinnvoll erscheinende Schnittstelle der Basisstation ausgebildet sein. Besonders bevorzugt ist die Schnittstelle hierbei als Ladeschnittstelle der Basisstation ausgebildet. Unter "autonom" soll in diesem Zusammenhang insbesondere "eigenständig arbeitend" verstanden werden. Vorzugsweise verrichtet das autonome Arbeitsgerät in einem Betriebszustand eine Arbeit zumindest zu einem Großteil unabhängig von einem Eingreifen durch einen Bediener. In einem besonders bevorzugten Ausführungsbeispiel ist das autonome Arbeitsgerät dazu vorgesehen, die Arbeit zumindest teilweise selbsttätig zu beginnen oder selbsttätig zu beenden und/oder zumindest teilweise selbsttätig zumindest einen Parameter, wie insbesondere einen Streckenparameter, und/oder einen Umkehrpunkt usw. auszuwählen. Besonders bevorzugt ist das autonome Arbeitsgerät zumindest teilweise dazu vorgesehen, zumindest eine Dienstleitung für einen Bediener und/oder Menschen im Allgemeinen zu erbringen. Das autonome Arbeitsgerät kann vorzugsweise als verschiedene, einem Fachmann als sinnvoll erscheinende autonome Serviceroboter ausgebildet sein, wie insbesondere als eine autonome Kehrmaschine, ein autonomer Staubsauger, eine autonome Schwimmbadreinigungsmaschine, ein autonomer Bodenwischroboter und/oder besonders bevorzugt ein autonomer Rasenmäher. Grundsätzlich sind jedoch auch andere, einem Fachmann als sinnvoll erscheinende autonome Arbeitsgräte denkbar.

Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "von einer Einfassungsdrahtorientierungsvorrichtung verschieden" soll in diesem Zusammenhang insbesondere zumindest nahezu vollständig von einem Einfassungsdraht, der vorzugsweise zu einer Begrenzung des Bearbeitungsbereichs vorgesehen ist, unabhängig verstanden werden.

Unter einer "Orientierung" soll in diesem Zusammenhang insbesondere eine Erfassung einer Position und/oder einer Ausrichtung des autonomen Arbeitsgeräts relativ zu der Basisstation verstanden werden. Unter einer "Ausrichtung" soll in diesem Zusammenhang insbesondere ein Winkel, den eine Fahrtrichtung des autonomen Arbeitsgeräts und eine Andockrichtung der Basisstation einschließen, verstanden werden. Unter einem "Bearbeitungsbereich" soll in diesem Zusammenhang insbesondere ein Bereich verstanden werden, der eine von dem autonomen Arbeitsgerät zu bearbeitende Fläche definiert.

Unter einer "Steuer- und/oder Regeleinheit" soll in diesem Zusammenhang insbesondere eine Einheit verstanden werden, die zumindest teilweise zu einer, insbesondere von einem Bediener unabhängigen, aktiven Beeinflussung und/oder aktiven Anpassung und/oder, insbesondere dynamischen, Veränderung eines Betriebs des autonomen Arbeitsgeräts vorzugsweise entsprechend eines Algorithmus, vorgesehen ist. Vorzugsweise umfasst die Steuer- und/oder Regeleinheit eine Prozessoreinheit und eine Speichereinheit sowie zumindest ein in der Speichereinheit gespeichertes Betriebsprogramm. Ferner soll in diesem Zusammenhang unter einer "Speichereinheit" insbesondere eine Einheit verstanden werden, die dazu vorgesehen ist, zumindest eine Information, vorteilhaft von einer Stromversorgung unabhängig, zu speichern.

Unter einem "gezielten Andocken" soll in diesem Zusammenhang insbesondere ein Anfahren der Ladeschnittstelle zumindest nahezu entlang einer Ideallinie verstanden werden. Eine Abweichung von der Ideallinie beträgt vorzugsweise maximal 2 cm und besonders bevorzugt maximal 1 cm. Unter einer "Basisstation" soll in diesem Zusammenhang insbesondere eine Einheit und/oder Baugruppe verstanden werden, die zumindest teilweise mit dem autonomen Arbeitsgerät, insbesondere elektrisch, koppelbar ausgebildet ist und zumindest in einem mit dem autonomen Arbeitsgerät gekoppelten Zustand dazu vorgesehen ist, zumindest einen Akku des autonomen Arbeitsgeräts mit einer elektrischen Energie aufzuladen.

Durch die erfindungsgemäße Ausgestaltung des autonomen Arbeitsgeräts können ein bevorzugt einfacher Betrieb und bevorzugt zuverlässige Führung des autonomen Arbeitsgeräts in einem Betriebszustand innerhalb des Bearbeitungsbereichs sowie eine vorteilhaft bedienerfreundliche Installation des autonomen Arbeitsgeräts erreicht werden.

Die zumindest eine mittels der zumindest einen Orientierungsvorrichtung erfasste Orientierungskenngröße kann in einem besonders bevorzugten Ausführungsbeispiel von einem zurückgelegten Weg des autonomen Arbeitsgeräts in einem Betriebszustand, insbesondere durch eine Wegerfassungseinheit, und/oder von einer Orientierung relativ zu der Basisstation, insbesondere durch eine Richtungserfassungseinheit, gebildet sein. Unter einem "zurückgelegten Weg" soll in diesem Zusammenhang insbesondere eine Wegstrecke verstanden werden, die das autonome Arbeitsgerät während eines Arbeitsvorgangs zurückgelegt hat bzw. gefahren ist. Vorzugsweise kann die Wegerfassungseinheit zu einer Inertialnavigation des autonomen Arbeitsgeräts vorgesehen sein. In einem besonders bevorzugten Ausführungsbeispiel umfasst die Wegerfassungseinheit zumindest ein Odometer und/oder zumindest einen Drehratensensor. Es sind jedoch auch andere, einem Fachmann als sinnvoll erscheinende Ausgestaltungen der Wegerfassungseinheit denkbar. Vorzugsweise kann die Ausrichtung des autonomen Arbeitsgeräts relativ zu der Basisstation lokal gespeichert und ein Winkel bei einem Start des autonomen Arbeitsgeräts von der Basisstation aus auf 0 ° gesetzt werden. Bei der Erfassung des zurückgelegten Wegs mittels der Inertialnavigation durch die Wegerfassungseinheit können, beispielsweise durch Schlupf, Ungenauigkeiten entstehen, die sich über den zunehmenden zurückgelegten Weg aufsummieren. Diese Ungenauigkeiten sind jedoch durch die, insbesondere durch die Akkulaufzeit, begrenzte Laufzeit des Arbeitsvorgangs des autonomen Arbeitsgeräts, beispielsweise auf maximal 2 m, begrenzt.

Die Richtungserfassungseinheit ist in einem besonders bevorzugten Ausführungsbeispiel zumindest teilweise zu einer globalen Orientierung relativ zu der Basisstation vorgesehen. Unter einer "Orientierung" soll in diesem Zusammenhang insbesondere die Ausrichtung des autonomen Arbeitsgeräts relativ zu der Basisstation bzw. der Winkel, den die Fahrtrichtung des autonomen Arbeitsgeräts und die Andockrichtung der Basisstation einschließen, verstanden werden. Die Richtungserfassungseinheit umfasst vorzugsweise einen elektronischen und/oder einen mechanischen Kompass und/oder ein GPS-basiertes Gerät. Es sind jedoch auch andere, einem Fachmann als sinnvoll erscheinende Ausgestaltungen der Richtungserfassungseinheit denkbar. Vorzugsweise umfasst die Orientierungsvorrichtung die Richtungserfassungseinheit zusätzlich zu der Wegerfassungseinheit. Es ist jedoch auch denkbar, dass die Orientierungsvorrichtung nur die Wegerfassungseinheit umfasst und auf die Richtungserfassungseinheit teilweise oder vorzugsweise vollständig verzichtet wird.

In einem besonders bevorzugten Ausführungsbeispiel ist die Orientierungsvorrichtung zumindest teilweise, vorzugsweise zumindest nahezu vollständig zu einer verbindungslosen Führung des autonomen Arbeitsgeräts innerhalb des Bearbeitungsbereichs vorgesehen. Besonders bevorzugt ist die Orientierungsvorrichtung zu einer verbindungslosen Führung des autonomen Arbeitsgeräts in einen Nahbereich der Basisstation vorgesehen. Unter einer "verbindungslosen Führung" soll in diesem Zusammenhang insbesondere verstanden werden, dass das autonome Arbeitsgerät unabhängig von einer Kommunikation bzw. von einem Datenaustausch mit der Basisstation, und insbesondere unabhängig von mechanischen Verbindungs- und/oder Leitelementen zu der Basisstation hin, wie beispielsweise einem Induktionsdraht, zu der Basisstation geführt werden kann. Unter einem "Nahbereich" soll in diesem Zusammenhang insbesondere ein Bereich verstanden werden, der insbesondere höchstens 5 m, vorzugsweise höchstens 2 m, bevorzugt höchstens 1 m und besonders bevorzugt höchstens 0,5 m von der Basisstation, insbesondere von einer Ladeschnittstelle der Basisstation entfernt angeordnet ist.

Ferner wird vorgeschlagen, dass die zumindest eine Steuer- und/oder Regeleinheit zumindest dazu vorgesehen ist, einen Versatz d relativ zu einer Hauptachse der Basisstation zu ermitteln. Unter einem "Versatz" soll in diesem Zusammenhang insbesondere ein Abstand des autonomen Arbeitsgeräts, insbesondere ein Abstand von einer Ladeschnittstelle des autonomen Arbeitsgeräts, zu der Hauptachse der Basisstation, der zumindest nahezu senkrecht zur Hauptachse der Basisstation verläuft, verstanden werden. Die Hauptachse der Basisstation ist vorzugsweise parallel zu einer Haupteinfahrtrichtung des autonomen Arbeitsgeräts zu einem Andocken an die Ladeschnittstelle der Basisstation angeordnet und schneidet die Ladeschnittstelle der Basisstation. Dadurch kann auf vorteilhaft einfache Weise und bevorzugt präzise die Ausrichtung des autonomen Arbeitsgeräts relativ zu der Ladeschnittstelle der Basisstation erreicht werden.

Zudem wird vorgeschlagen, dass die Orientierungsvorrichtung eine Sende- und/oder Empfangseinheit umfasst, die zu einer Kommunikation zumindest mit der Basisstation innerhalb eines Nahbereichs der Basisstation vorgesehen ist, wobei die zumindest eine Steuer- und/oder Regeleinheit dazu vorgesehen ist, den Versatz d relativ zu einer Hauptachse der Basisstation zumindest teilweise anhand zumindest einer von der Sende- und/oder Empfangseinheit erfassten Information zu ermitteln. Unter einer "Kommunikation" soll in diesem Zusammenhang insbesondere ein Datenaustausch zumindest zwischen dem autonomen Arbeitsgerät und der Basisstation in zumindest eine Richtung verstanden werden. Die Kommunikation zwischen dem autonomen Arbeitsgerät und der Basisstation ist vorzugsweise bidirektional ausgebildet. In einem besonders bevorzugten Ausführungsbeispiel ist die Sende- und/oder Empfangseinheit zu einer, insbesondere drahtlosen, Kommunikation zumindest mit der Basisstation insbesondere lediglich in dem Nahbereich der Basisstation vorgesehen. Unter einem "Nahbereich" soll in diesem Zusammenhang insbesondere ein Bereich verstanden werden, der insbesondere höchstens 5 m, vorzugsweise höchstens 2 m, bevorzugt höchstens 1 m und besonders bevorzugt höchstens 0,5 m von der Basisstation, insbesondere von einer Ladeschnittstelle der Basisstation, entfernt angeordnet ist. Dadurch kann eine bevorzugt zuverlässige Führung des autonomen Arbeitsgeräts, insbesondere bei einer Anfahrt an die Basisstation, erreicht werden.

Des Weiteren wird vorgeschlagen, dass die zumindest eine Steuer- und/oder Regeleinheit dazu vorgesehen ist, den Versatz d relativ zu einer Hauptachse der Basisstation zumindest teilweise durch eine Entfernungsmessung an zumindest zwei, voneinander beabstandet angeordneten Punkten zu ermitteln. Die Entfernungsmessung wird vorzugsweise zumindest mittels einer Laufzeitmessung eines Signals erreicht. Dadurch kann eine bevorzugt hohe Präzision bei der Bestimmung des Versatzes d erreicht werden.

Zudem wird vorgeschlagen, dass die Sende- und/oder Empfangseinheit nach einem Erreichen des Nahbereichs der Basisstation zumindest zu einem Aussenden zumindest eines Signals vorgesehen ist, das dazu vorgesehen ist, ein Aussenden zumindest eines Antwortsignals durch die Basisstation auszulösen. Dadurch kann eine vorteilhaft einfache Kommunikation mit der Basisstation und somit eine bevorzugt zuverlässige Führung des autonomen Arbeitsgeräts zu der Ladeschnittstelle der Basisstation erreicht werden.

Ferner wird vorgeschlagen, dass die Sende- und/oder Empfangseinheit zumindest ein Ultraschallelement zu einer Kommunikation zumindest mit der Basisstation innerhalb des Nahbereichs der Basisstation umfasst. Unter einem "Ultraschallelement" soll in diesem Zusammenhang insbesondere ein Element verstanden werden, das zu einer Kommunikation zumindest zu einem Großteil mittels Ultraschallwellen vorgesehen ist. Das zumindest eine Ultraschallelement kann vorzugsweise als Utraschalltransceiver genutzt werden. In einem besonders bevorzugten Ausführungsbeispiel ist das zumindest eine Ultraschallelement als Ultraschall-Parkpilotsensor, insbesondere von der Robert Bosch GmbH, ausgebildet. Dadurch kann eine vorteilhaft kostengünstige und konstruktiv einfache Ausgestaltung der Sende- und/oder Empfangseinheit erreicht werden.

Des Weiteren wird vorgeschlagen, dass die Sende- und/oder Empfangseinheit zumindest ein Ultra-Wide-Band-Element zu einer Kommunikation zumindest mit der Basisstation innerhalb des Nahbereichs der Basisstation umfasst. Unter einem " Ultra-Wide-Band-Element" soll in diesem Zusammenhang insbesondere ein Element verstanden werden, das zu einer Kommunikation zumindest zu einem Großteil mittels UWB-Wellen vorgesehen ist. Das zumindest eine Ultra-Wide-Band-Element kann zumindest teilweise als ein Halbfeldstrahler oder als eine Richtantenne oder auf eine andere, einem Fachmann als sinnvollerscheinende Weise ausgebildet sein, wodurch eine Kommunikation mit der Basisstation über eine bevorzugt große Distanz erreicht werden kann. Durch das zumindest eine Ultra-Wide-Band-Element kann eine vorteilhaft flexibel einsetzbare und konstruktiv einfache Ausgestaltung der Sende- und/oder Empfangseinheit erreicht werden. Zudem kann durch eine Verwendung eines Frequenzbands durch das Ultra-Wide-Band-Element vorteilhaft ein bevorzugt robustes Verfahren erreicht werden, da keine natürlich auftretenden Störquellen bekannt sind. Das Ultra-Wide-Band-Element kann zudem vorteilhaft zu einer Datenübertragung genutzt werden. Ferner kann eine vorteilhaft hohe Robustheit gegenüber Mehrwegpfaden, die aufgrund einer niedrigen Sensorhöhe der Sende- und/oder Empfangseinheit entstehen können, erreicht werden.

Ferner geht die Erfindung aus von einer Basisstation mit zumindest einer Schnittstelle, insbesondere einer Ladeschnittstelle, die mit einem autonomen Arbeitsgerät, insbesondere mit einem autonomen Rasenmäher, koppelbar ausgebildet ist.

Es wird vorgeschlagen, dass die Basisstation eine Sende- und/oder Empfangseinheit aufweist, die zu einer Kommunikation zumindest mit dem autonomen Arbeitsgerät vorgesehen ist und die bis zu einem Erkennen zumindest eines von der Sende- und/oder Empfangseinheit des autonomen Arbeitsgeräts ausgesendeten Signals in einem Empfangsmodus ist. Unter einer "Kommunikation" soll in diesem Zusammenhang insbesondere ein Datenaustausch zumindest zwischen dem autonomen Arbeitsgerät und der Basisstation in zumindest eine Richtung verstanden werden. Die Kommunikation zwischen dem autonomen Arbeitsgerät und der Basisstation ist vorzugsweise bidirektional ausgebildet. In einem besonders bevorzugten Ausführungsbeispiel ist die Sende- und/oder Empfangseinheit zu einer, insbesondere drahtlosen, Kommunikation zumindest mit der Basisstation insbesondere lediglich in dem Nahbereich der Basisstation vorgesehen. Dadurch kann eine bevorzugt zuverlässige Führung des autonomen Arbeitsgeräts, insbesondere bei einer Anfahrt an die Basisstation, erreicht werden.

Zudem wird vorgeschlagen, dass die Sende- und/oder Empfangseinheit zumindest ein Ultraschallelement zu einer Kommunikation zumindest mit dem autonomen Arbeitsgerät umfasst. Unter einem "Ultraschallelement" soll in diesem Zusammenhang insbesondere ein Element verstanden werden, das zu einer Kommunikation zumindest zu einem Großteil mittels Ultraschallwellen vorgesehen ist. Das zumindest eine Ultraschallelement kann vorzugsweise als Utraschalltransceiver genutzt werden. In einem besonders bevorzugten Ausführungsbeispiel ist das zumindest eine Ultraschallelement als Ultraschall-Parkpilotsensor, insbesondere von der Robert Bosch GmbH, ausgebildet. Dadurch kann eine vorteilhaft kostengünstige und konstruktiv einfache Ausgestaltung der Sende- und/oder Empfangseinheit erreicht werden.

Des Weiteren wird vorgeschlagen, dass die Sende- und/oder Empfangseinheit der Basisstation zumindest ein Ultra-Wide-Band-Element zu einer Kommunikation zumindest mit dem autonomen Arbeitsgerät umfasst. Unter einem "Ultra-Wide-Band-Element" soll in diesem Zusammenhang insbesondere ein Element verstanden werden, das zu einer Kommunikation zumindest zu einem Großteil mittels Ultra-Wide-Band-Wellen vorgesehen ist. Das zumindest eine Ultra-Wide-Band-Element kann zumindest teilweise als ein Halbfeldstrahler oder als eine Richtantenne oder auf eine andere, einem Fachmann als sinnvoll erscheinende Weise ausgebildet sein, wodurch eine Kommunikation mit dem autonomen Arbeitsgerät über eine bevorzugt große Distanz und in einem vorteilhaft großen Richtungsbereich erreicht werden kann. Dabei kann das zumindest eine Ultra-Wide-Band-Element beispielsweise zusätzlich als Markierungspunkt für eine Navigation genutzt werden. Durch das zumindest eine Ultra-Wide-Band-Element kann eine vorteilhaft flexibel einsetzbare und konstruktiv einfache Ausgestaltung der Sende- und/oder Empfangseinheit erreicht werden.

Ferner wird ein System mit zumindest einem autonomen Arbeitsgerät, insbesondere mit einem autonomen Rasenmäher, und mit zumindest einer Basisstation vorgeschlagen.

Zudem geht die Erfindung aus von einem Verfahren zu einer Kopplung eines autonomen Arbeitsgeräts, insbesondere eines autonomen Rasenmähers, mit einer Schnittstelle, insbesondere mit einer Ladeschnittstelle, einer Basisstation.

Dabei wird vorgeschlagen, dass das Verfahren zumindest einen Verfahrensschritt umfasst, in dem mittels zumindest einer Steuer- und/oder Regeleinheit in Abhängigkeit von zumindest einer von einer Einfassungsdrahtorientierungsvorrichtung verschiedenen Orientierungsvorrichtung erfassten Information eine Ausrichtung relativ zu einer Basisstation zu einem gezielten Andocken an eine Ladeschnittstelle der Basisstation ermittelt wird. Dadurch können ein bevorzugt einfacher Betrieb und eine bevorzugt zuverlässige Führung des autonomen Arbeitsgeräts in einem Betriebszustand innerhalb des Bearbeitungsbereichs sowie eine vorteilhaft bedienerfreundliche Installation des autonomen Arbeitsgeräts erreicht werden.

Zudem wird vorgeschlagen, dass das Verfahren zumindest einen Verfahrensschritt umfasst, in dem ein Versatz d des autonomen Arbeitsgeräts relativ zu einer Hauptachse der Basisstation ermittelt wird. Dadurch kann auf vorteilhaft einfache Weise und bevorzugt präzise die Ausrichtung des autonomen Arbeitsgeräts relativ zu der Ladeschnittstelle der Basisstation erreicht werden.

Des Weiteren wird vorgeschlagen, dass das Verfahren zumindest einen Verfahrensschritt umfasst, in dem eine Sende- und/oder Empfangseinheit des autonomen Arbeitsgeräts nach einem Erreichen des Nahbereichs der Basisstation zumindest ein Signal aussendet, das dazu vorgesehen ist, ein Aussenden zumindest eines Antwortsignals durch eine Sende- und/oder Empfangseinheit der Basisstation nach einem Erkennen des zumindest einen Signals auszulösen. Dadurch können ein bevorzugt einfacher Betrieb, eine vorteilhaft zuverlässige und präzise Führung des autonomen Arbeitsgeräts zu der Basisstation und somit eine vorteilhaft hohe Autonomie des Systems und ein bevorzugt hoher Bedienerkomfort erreicht werden.

Das erfindungsgemäße autonome Arbeitsgerät soll hierbei nicht auf die oben beschriebene Anwendung und Ausführungsform beschränkt sein. Insbesondere kann das erfindungsgemäße autonome Arbeitsgerät zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein autonomes Arbeitsgerät mit einer Orientierungsvorrichtung in einer schematischen Draufsicht,
- Fig. 2: ein System mit einer Basisstation und dem autonomen Arbeitsgerät während eines Andockvorgangs in einer schematischen Darstellung,
- Fig. 3: das System mit der Basisstation und dem autonomen Arbeitsgerät während eines Andockvorgangs in einer weiteren schematischen Darstellung,
- Fig. 4: das System mit der Basisstation und dem autonomen Arbeitsgerät während eines Andockvorgangs in einer weiteren schematischen Darstellung und
- Fig. 5: ein schematisches Blockdiagramm eines Verfahrens zu einer Kopplung des autonomen Arbeitsgeräts mit der Basisstation.

### Beschreibung des Ausführungsbeispiels

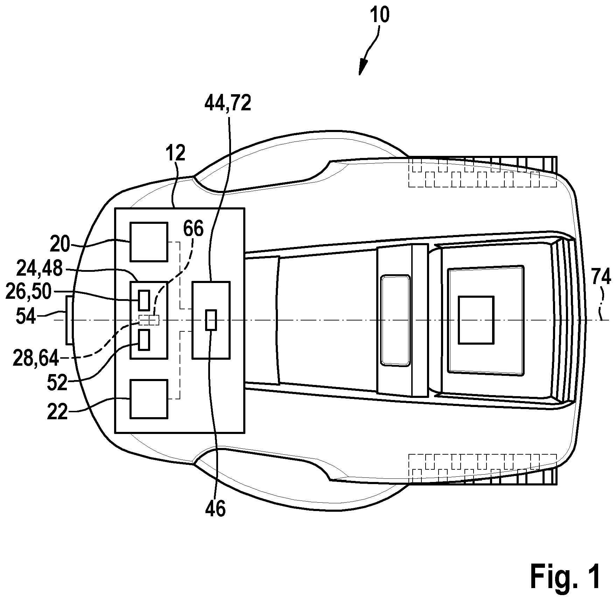

In Figur 1 ist ein autonomes Arbeitsgerät 10 schematisch dargestellt. Das autonome Arbeitsgerät 10 ist als autonomer Serviceroboter ausgebildet. Das autonome Arbeitsgerät 10 ist als autonomer Rasenmäher ausgebildet. Das autonome Arbeitsgerät 10 ist dazu vorgesehen einen Bearbeitungsbereich 14 zu mähen. Der Bearbeitungsbereich 14 ist von einer Wiese bzw. einem Rasen eines Gartens gebildet. Grundsätzlich wäre jedoch auch denkbar, dass das autonome Arbeitsgerät 10 von einem Staubsaugerroboter oder einem anderen, dem Fachmann als sinnvoll erscheinenden Serviceroboter gebildet ist und der Bearbeitungsbereich 14 dementsprechend beispielsweise von einem Raum gebildet ist. Ferner kann das autonome Arbeitsgerät 10 auch für mehrere Bearbeitungsbereiche 14 programmiert werden. Die verschiedenen Bearbeitungsbereiche 14 können dabei separat gespeichert werden und je nach derzeitigem Standort des autonomen Arbeitsgeräts 10 separat angewählt werden.

Das autonome Arbeitsgerät 10 weist eine von einer Einfassungsdrahtorientierungsvorrichtung verschiedenen Orientierungsvorrichtung 12 auf, die zu einer Orientierung innerhalb eines Bearbeitungsbereichs 14 vorgesehen ist. Zudem ist die Orientierungsvorrichtung 12 zu einer verbindungslosen Führung zumindest in einen Nahbereich 16 einer Basisstation 18 vorgesehen. Die Orientierungsvorrichtung 18 ist zu einer verbindungslosen Führung in den Nahbereich 16 der Basisstation 18 vorgesehen. Die Orientierungsvorrichtung 12 ist dazu vorgesehen, das autonome Arbeitsgerät 10 nach einem Betrieb zu einem Laden eines Akkus des autonomen Arbeitsgeräts 10 zu der Basisstation 18 zurückzuführen. Hierfür wird mittels der Orientierungsvorrichtung 12 in einem Betriebszustand eine Orientierung des autonomen Arbeitsgeräts 10 relativ zu der Basisstation 18 innerhalb des Bearbeitungsbereichs 14 erfasst.

Das autonome Arbeitsgerät 10 weist ferner eine Steuer- und/oder Regeleinheit 72 zu einer Ermittlung einer Fahrstrategie auf, die dazu vorgesehen ist, eine Ausrichtung relativ zu einer Basisstation 18 zu einem gezielten Andocken an eine Ladeschnittstelle 30 der Basisstation 18 in Abhängigkeit von zumindest einer mittels der zumindest einen Orientierungsvorrichtung 12 erfassten Orientierungskenngröße zu ermitteln. Die Orientierungskenngröße ist von einer Orientierung des autonomen Arbeitsgeräts 10 relativ zu der Basisstation 18 sowie von einem zurückgelegten Weg des autonomen Arbeitsgeräts 10 in einem Betriebszustand gebildet. Die Steuer- und/oder Regeleinheit 72 ist dazu vorgesehen, einen Versatz d relativ zu einer Hauptachse 74 der Basisstation 18 zu ermitteln. Die Steuer- und/oder Regeleinheit 72 ist dazu vorgesehen, den Versatz d relativ zur Hauptachse 74 der Basisstation 18 anhand einer von einer Sende- und/oder Empfangseinheit 24 der Orientierungsvorrichtung 12 erfassten Information zu ermitteln. Die Steuer- und/oder Regeleinheit 72 ist dazu vorgesehen, den Versatz d relativ zur Hauptachse 74 der Basisstation 18 durch eine Entfernungsmessung an zumindest zwei, voneinander beabstandet angeordneten Punkten zu ermitteln.

Die Orientierungsvorrichtung 12 weist eine Richtungserfassungseinheit 22 auf, die zu der Orientierung des autonomen Arbeitsgeräts 10 relativ zu der Basisstation 18 vorgesehen ist. Die Richtungserfassungseinheit 22 der Orientierungsvorrichtung 12 ist zu einer globalen Orientierung des autonomen Arbeitsgeräts 10 vorgesehen. Die Richtungserfassungseinheit 22 der Orientierungsvorrichtung 12 umfasst ein nicht dargestelltes GPS-Element. Es ist jedoch auch denkbar, dass die Richtungserfassungseinheit 22 der Orientierungsvorrichtung 12 alternativ oder zusätzlich einen Kompass, insbesondere einen elektronischen oder magnetischen Kompass, umfasst.

Die Orientierungsvorrichtung 12 umfasst dafür eine Wegerfassungseinheit 20, die zu einer Erfassung des zurückgelegten Wegs des autonomen Arbeitsgeräts 10 in einem Betriebszustand vorgesehen ist. Die Wegerfassungseinheit 20 der Orientierungsvorrichtung 12 ist zu einer Erfassung der zurückgelegten Wegstrecke ab einem Starten des autonomen Arbeitsgeräts 10 von der Basisstation 18 aus vorgesehen. Die Wegerfassungseinheit 20 der Orientierungsvorrichtung 12 umfasst zumindest einen Beschleunigungssensor bzw. Drehratensensor zur Erfassung einer Linearbeschleunigung oder einer Winkelbeschleunigung des autonomen Arbeitsgeräts 10 in einem Betriebszustand. Die Wegerfassungseinheit 20 der Orientierungsvorrichtung 12 umfasst mehrere nicht dargestellte Beschleunigungs- bzw. Drehratensensoren. Die Wegerfassungseinheit 20 der Orientierungsvorrichtung 12 umfasst zudem ein nicht dargestelltes Odometrieelement bzw. ein Odometer zu einer indirekten Erfassung der zurückgelegten Wegstrecke über eine Anzahl von Umdrehungen, die Antriebsräder des autonomen Arbeitsgeräts 10 in einem Betriebszustand durchführen.

Die Wegerfassungseinheit 20 und die Richtungserfassungseinheit 22 der Orientierungsvorrichtung 12 des autonomen Arbeitsgeräts 10 sind dazu vorgesehen, in einem Betriebszustand zu jeder Zeit eine Position des autonomen Arbeitsgeräts 10 innerhalb des Bearbeitungsbereichs 14 und relativ zu der Basisstation 18 sowie eine Winkelausrichtung relativ zu der Basisstation 18 zu erfassen. Die Orientierungsvorrichtung 12 umfasst eine Recheneinheit 44, die zu einer Auswertung der Informationen der Wegerfassungseinheit 20 und der Richtungserfassungseinheit 22 vorgesehen ist. Die Wegerfassungseinheit 20 und die Richtungserfassungseinheit 22 sind jeweils zu einem Datenaustausch mit der Recheneinheit 44 verbunden. Die Wegerfassungseinheit 20 und die Richtungserfassungseinheit 22 sind jeweils elektronisch mit der Recheneinheit 44 verbunden. Die Steuer- und/oder Regeleinheit 72 umfasst die Recheneinheit 44. Die Recheneinheit 44 weist ein Filterelement 46 auf, das zu einer Filterung und Fusion der von der Wegerfassungseinheit 20 und der Richtungserfassungseinheit 22 erfassten Informationen und Daten vorgesehen ist. Das Filterelement 46 der Recheneinheit 44 ist von einem Kalman-Filter gebildet.

Die Orientierungsvorrichtung 12 umfasst zudem die Sende- und/oder Empfangseinheit 24, die zu einer Kommunikation zumindest mit der Basisstation 18 innerhalb eines Nahbereichs (16) der Basisstation 18 vorgesehen ist. Die Sende- und/oder Empfangseinheit 24 ist nach einem Erreichen des Nahbereichs 16 der Basisstation 18 zu einem Aussenden zumindest eines Signals vorgesehen, das dazu vorgesehen ist, ein Aussenden zumindest eines Antwortsignals durch die Basisstation 18 auszulösen. Die Sende- und/oder Empfangseinheit 24 ist als Sende- und Empfangseinheit 48 ausgebildet und ist zu einer Kommunikation mit der Basisstation 18 vorgesehen. Die Sende- und Empfangseinheit 48 ist zu einer bidirektionalen Kommunikation mit der Basisstation 18 vorgesehen. Die Sende- und Empfangseinheit 48 ist zu einer Kommunikation mit der Basisstation 18 mittels "round trippings" vorgesehen. Die Sende- und Empfangseinheit 48 weist ein Ultraschallelement 26 zu einer Kommunikation zumindest mit der Basisstation 18 innerhalb des Nahbereichs 16 der Basisstation 18 auf. Das Ultraschallelement 26 ist dazu vorgesehen, Ultraschallwellen zur Orientierung relativ zu der Basisstation 18 auszusenden. Das Ultraschallelement 26 ist als Ultraschallsendeelement 50 ausgebildet. Das Ultraschallelement 26 der Sende- und Empfangseinheit 48 ist dazu vorgesehen, Ultraschallwellen in einer eindeutigen Folge auszusenden. Das Ultraschallelement 26 der Sende- und Empfangseinheit 48 ist somit als Ultraschalltriggerelement ausgebildet. Die Sende- und Empfangseinheit 48 der Orientierungsvorrichtung 12 weist zudem ein Ultraschallempfangselement 52 auf, das dazu vorgesehen ist, Ultraschallwellen zur Orientierung relativ zu der Basisstation 18 zu empfangen. Das Ultraschallelement 26 und das Ultraschallempfangselement 52 sind jeweils als ein integrierter Sensor ausgebildet.

Die Basisstation 18 und das autonome Arbeitsgerät 10, das von dem autonomen Rasenmäher gebildet ist, sind Bestandteil eines Systems. Die Basisstation 18 weist die schematisch dargestellte Ladeschnittstelle 30 auf, die mit dem autonomen Arbeitsgerät 10 koppelbar ausgebildet ist. Das autonome Arbeitsgerät 10 weist hierfür ebenfalls eine Ladeschnittstelle 54 auf, die mit der Ladeschnittstelle 30 der Basisstation 18 korrespondierend ausgebildet ist. Die Ladeschnittstelle 30 der Basisstation 18 und die Ladeschnittstelle 54 des autonomen Arbeitsgeräts 10 sind als elektrische Kontakte ausgebildet. Die Basisstation 18 weist eine nicht dargestellte mechanische Führung auf, die dazu vorgesehen ist, mit dem autonomen Arbeitsgerät 10 zu korrespondieren und das autonome Arbeitsgerät 10 bei einem Andockvorgang an die Ladeschnittstelle 30 der Basisstation 18 zu leiten um das Andocken zu erleichtern.

Die Basisstation 18 weist zudem eine Sende- und/oder Empfangseinheit 32 auf, die zu einer Kommunikation zumindest mit dem autonomen Arbeitsgerät 10 vorgesehen ist und die bis zu einem Erkennen eines von der Sende- und/oder Empfangseinheit 24 des autonomen Arbeitsgeräts 10 ausgesendeten Signals in einem Empfangsmodus ist. Die Sende- und/oder Empfangseinheit 32 der Basisstation 18 ist als Sende- und Empfangseinheit 56 ausgebildet und ist zu einer Kommunikation mit dem autonomen Arbeitsgerät 10 vorgesehen. Die Sende- und Empfangseinheit 56 ist zu einer bidirektionalen Kommunikation mit dem autonomen Arbeitsgerät 10 vorgesehen. Die Sende- und Empfangseinheit 56 weist ein Ultraschallelement 34 auf. Das Ultraschallelement 34 der Sende- und Empfangseinheit 56 der Basisstation 18 ist dazu vorgesehen, Ultraschallwellen zur Orientierung des autonomen Arbeitsgeräts 10 relativ zu der Basisstation 18 auszusenden. Das Ultraschallelement 34 der Sende- und Empfangseinheit 56 der Basisstation 18 ist als Ultraschallsendeelement 58 ausgebildet. Das Ultraschallelement 34 der Sende- und Empfangseinheit 56 der Basisstation 18 ist dazu vorgesehen, Ultraschallwellen in einer eindeutigen Folge als Antwortsignal auszusenden. Das Ultraschallelement 34 der Sende- und Empfangseinheit 56 der Basisstation 18 ist somit als Ultraschalltriggerelement ausgebildet. Die Sende- und Empfangseinheit 56 der Basisstation 18 weist zudem ein Ultraschallempfangselement 60 auf, das dazu vorgesehen ist Ultraschallwellen zur Orientierung des autonomen Arbeitsgeräts 10 relativ zu der Basisstation 18 zu empfangen. Das Ultraschallelement 34 und das Ultraschallempfangselement 60 der Sende- und Empfangseinheit 56 der Basisstation 18 sind jeweils als ein integrierter Sensor ausgebildet. Die Ultraschallelemente 26, 34 bzw. die Ultraschallempfangselemente 52, 60 sind korrespondierend ausgebildet. Die Ultraschallelemente 26, 34 bzw. die Ultraschallempfangselemente 52, 60 sind zu einer Kommunikation mittels Ultraschallwellen vorgesehen.

Alternativ ist es auch denkbar, dass die Sende- und/oder Empfangseinheit 24 des autonomen Arbeitsgeräts 10 ein Ultra-Wide-Band-Element 28 zu einer Kommunikation zumindest mit der Basisstation 18 innerhalb des Nahbereichs 16 der Basisstation 18 umfasst, das das bereits beschriebene Ultraschallelement 26 ersetzen kann (gestrichelt dargestellt). Zudem ist es auch denkbar, dass die Sende- und/oder Empfangseinheit 32 der Basisstation 18 ein Ultra-Wide-Band-Element 36 zu einer Kommunikation zumindest mit dem autonomen Arbeitsgerät 10 umfasst, das das bereits beschriebene Ultraschallelement 34 ersetzt (gestrichelt dargestellt). Es ist jedoch auch denkbar, dass die Sende- und/oder Empfangseinheit 24 des autonomen Arbeitsgeräts 10 und/oder die Sende- und/oder Empfangseinheit 32 der Basisstation 18 sowohl zumindest ein Ultra-Wide-Band-Element 28, 36 als auch zumindest ein Ultraschallelement 26, 34 umfasst und/oder ein anderes, einem Fachmann als sinnvoll erscheinendes, insbesondere akustisches, Element umfasst. Die Ultra-Wide-Band-Elemente 28, 36 sind korrespondierend ausgebildet. Die Ultra-Wide-Band-Elemente 28, 36 sind zu einer Kommunikation mittels Radiowellen vorgesehen. Die Ultra-Wide-Band-Elemente 28, 36 sind dazu vorgesehen, Radiowellen in einem Frequenzbereich zwischen 3,1 GHz und 10,6 GHz auszusenden. Die Ultra-Wide-Band-Elemente 28, 36 sind dazu vorgesehen, die Radiowellen als Impulse auszusenden. Die Ultra-Wide-Band-Elemente 28, 36 sind als UWB-Sendeelemente 62, 64 ausgebildet. Die Sende- und/oder Empfangseinheit 24 des autonomen Arbeitsgeräts 10 und/oder die Sende- und/oder Empfangseinheit 32 der Basisstation 18 kann zudem jeweils ein Ultra-Wide-Band-Empfangselement 66, 68 umfassen, das zu einem Empfangen der von den Ultra-Wide-Band-Elementen 28, 36 ausgesandten Radiowellen vorgesehen ist.

In einem Betriebszustand des autonomen Arbeitsgeräts 10 wird die jeweilige Position des autonomen Arbeitsgeräts 10 relativ zu der Basisstation 18 mittels der Wegerfassungseinheit 20 und der Richtungserfassungseinheit 22 der Orientierungsvorrichtung 12 indirekt ermittelt. Nach einem Arbeitsvorgang des autonomen Arbeitsgeräts 10 soll das autonome Arbeitsgerät 10 zu der Basisstation 18 zurückkehren und zu einem Wiederaufladen des Akkus des autonomen Arbeitsgeräts 10 mit der Ladeschnittstelle 54 an der Ladeschnittstelle 30 der Basisstation 18 andocken. Bei einem Andocken des autonomen Arbeitsgeräts 10 an der Basisstation 18 ist eine Genauigkeit von 1 cm bis 2 cm erforderlich.

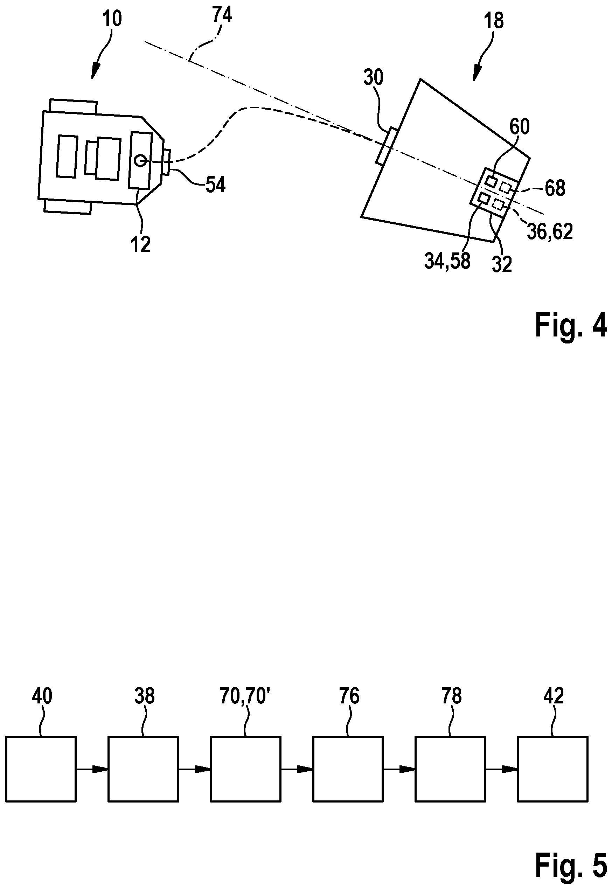

Hierfür ist ein Verfahren zur Kopplung des autonomen Arbeitsgeräts 10, das von dem autonomen Rasenmäher gebildet ist, mit der Ladeschnittstelle 30 der Basisstation 18 vorgesehen (Figur 5). Das Verfahren weist einen Verfahrensschritt 40 auf, in dem mittels der Steuer- und/oder Regeleinheit 72 in Abhängigkeit von der von einer Einfassungsdrahtorientierungsvorrichtung verschiedenen Orientierungsvorrichtung 12 erfassten Information die Ausrichtung des autonomen Arbeitsgeräts 10 relativ zur Basisstation 18 zum gezielten Andocken an die Ladeschnittstelle 30 der Basisstation 18 ermittelt wird. Der Verfahrensschritt 40 ist zur Orientierung des autonomen Arbeitsgeräts 10 und zur Erfassung der Position des autonomen Arbeitsgeräts 10 relativ zu der Basisstation 18 im Betriebszustand bzw. während des Arbeitsvorgangs des autonomen Arbeitsgeräts 10 zumindest teilweise mittels einer Wegerfassungseinheit 20 und/oder einer Richtungserfassungseinheit 22 der Orientierungsvorrichtung 12 des autonomen Arbeitsgeräts 10 vorgesehen. In dem Verfahrensschritt 40 werden die Orientierung und die Position des autonomen Arbeitsgeräts 10 relativ zu der Basisstation 18 innerhalb des Nahbereichs 16 der Basisstation 18 mittels der Wegerfassungseinheit 20 und der Richtungserfassungseinheit 22 der Orientierungsvorrichtung 12 des autonomen Arbeitsgeräts 10 ermittelt.

Das Verfahren weist einen Verfahrensschritt 38 auf, in dem das autonome Arbeitsgerät 10 nach dem Arbeitsvorgang mittels zumindest einer Information der Orientierungsvorrichtung 12 in den Nahbereich 16 der Basisstation 18 gebracht wird. Das autonome Arbeitsgerät 10 wird in dem Verfahrensschritt 38 anhand der mittels der Richtungserfassungseinheit 22 und der Wegerfassungseinheit 20 der Orientierungsvorrichtung 12 ermittelten Position des autonomen Arbeitsgeräts 10 in den Nahbereich 16 der Basisstation 18 geführt. Dies geschieht unabhängig von einer Kommunikation zwischen der Basisstation 18 und dem autonomen Arbeitsgerät 10. Während dem Verfahrensschritt 38 und dem Verfahrensschritt 40 besteht keine kommunikative Verbindung zwischen der Basisstation 18 und dem autonomen Arbeitsgerät 10.

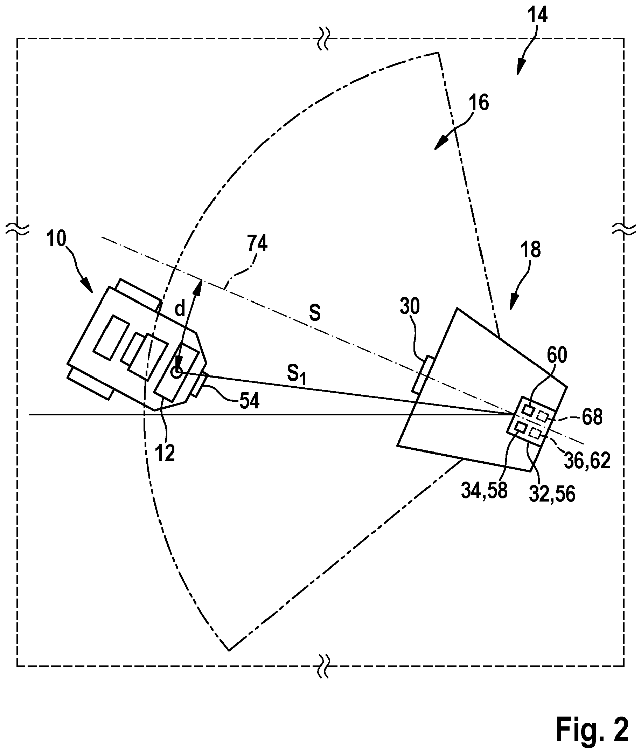

Hierfür erfasst die Richtungserfassungseinheit 22 der Orientierungsvorrichtung 12 die Orientierung des autonomen Arbeitsgeräts 10 relativ zu der Basisstation 18 und die Wegerfassungseinheit 20 der Orientierungsvorrichtung 12 die Position des autonomen Arbeitsgeräts 10 relativ zu der Basisstation 18. Zu einer Rückkehr des autonomen Arbeitsgeräts 10 zu der Basisstation 18 nach einem Arbeitsvorgang fährt das autonome Arbeitsgerät 10 in den Nahbereich 16 der Basisstation 18, der von der Recheneinheit 44 mittels der Informationen und Daten der Wegerfassungseinheit 20 und der Richtungserfassungseinheit 22 berechnet wird. Das autonome Arbeitsgerät 10 fährt so in den Nahbereich 16 der Basisstation 18, dass das autonome Arbeitsgerät 10 von der Sende- und Empfangseinheit 56 der Basisstation 18 um eine berechnete Strecke s entfernt ist. Diese Position kann mithilfe der Richtungserfassungseinheit 22 der Orientierungsvorrichtung 12 berechnet werden (Figur 2). Zudem fährt das autonome Arbeitsgerät 10 so in den Nahbereich 16 der Basisstation 18, dass das Ultraschallelement 36 der Sende- und Empfangseinheit 48 des autonomen Arbeitsgeräts 10 zu dem Ultraschallelement 34 der Sende- und Empfangseinheit 56 der Basisstation 18 ausgerichtet ist. Dadurch kann auf eine omnidirektionale Ausgestaltung des Ultraschallelements 26 der Sende- und Empfangseinheit 48 des autonomen Arbeitsgeräts 10 und des Ultraschallelements 34 der Sende- und Empfangseinheit 56 der Basisstation 18 verzichtet werden. Hierfür kann ein Öffnungswinkel des Ultraschallelements 26 der Sende- und Empfangseinheit 48 des autonomen Arbeitsgeräts 10 und des Ultraschallelements 34 der Sende- und Empfangseinheit 56 der Basisstation 18 mechanisch begrenzt werden, wodurch beispielsweise Echos von einem Boden des Bearbeitungsbereichs 14 verringert oder vorzugsweise verhindert werden können.

Um die exakte Position des autonomen Arbeitsgeräts 10 relativ zu der Basisstation 18 innerhalb des Nahbereichs 16 der Basisstation 18 bestimmen zu können, wird in einem weiteren Verfahrensschritt 70 eine kommunikative Verbindung zwischen der Basisstation 18 und dem autonomen Arbeitsgerät 10 mittels der Sende- und Empfangseinheit 56 der Basisstation 18 und der Sende- und Empfangseinheit 48 des autonomen Arbeitsgeräts 10 hergestellt. Hierfür weist das Verfahren einen Verfahrensschritt 76 auf, in dem der Versatz d des autonomen Arbeitsgeräts 10 relativ zur Hauptachse 74 der Basisstation 18 ermittelt wird. Das Ultraschallelement 26 des autonomen Arbeitsgeräts 10 sendet dabei das Signal aus der definierten Sequenz von Ultraschallwellen aus. Das Signal umfasst beispielsweise zwei definierte Sequenzen von Ultraschallsignalen mit einem Zeitabstand von 100 ms. Die definierte Sequenz von Ultraschallsignalen, die das Ultraschallelement 26 des autonomen Arbeitsgeräts 10 aussendet, ist so gewählt, dass es keine Überschneidung mit Signalen in einem Betriebszustand des autonomen Arbeitsgeräts 10 gibt und somit eine eindeutige Zuordnung erreicht werden kann. Dadurch kann die Sende- und Empfangseinheit 48 des autonomen Arbeitsgeräts 10 zusätzlich für eine Hinderniserkennung in einem Betriebszustand des autonomen Arbeitsgeräts 10 genutzt werden, ohne eine Verwechslung zu riskieren. Alternativ oder zusätzlich zu den akustischen Ultraschallsignalen ist es auch denkbar, ein Triggersignal, beispielsweise aus Radiowellen, zur Lokalisierung der Basisstation 18 zu verwenden.

Hierfür weist das Verfahren einen Verfahrensschritt 78 auf, in dem die Sende- und/oder Empfangseinheit 24 des autonomen Arbeitsgeräts 10 nach dem Erreichen des Nahbereichs 16 der Basisstation 18 das Signal aussendet, das dazu vorgesehen ist, das Aussenden des Antwortsignals durch die Sende- und/oder Empfangseinheit 32 der Basisstation 18 nach einem Erkennen des Signals auszulösen. Sobald das Ultraschallempfangselement 60 der Sende- und Empfangseinheit 56 der Basisstation 18 die definierte und eindeutige Sequenz von Ultraschallsignalen der Sende- und Empfangseinheit 48 des autonomen Arbeitsgeräts 10 empfängt, sendet das Ultraschallelement 34 der Sende- und Empfangseinheit 56 der Basisstation 18 eine ebenfalls definierte und eindeutige Sequenz von Ultraschallsignalen zurück. Die definierte und eindeutige Sequenz von Ultraschallsignalen der Sende- und Empfangseinheit 48 des autonomen Arbeitsgeräts 10 und die definierte und eindeutige Sequenz von Ultraschallsignalen der Sende- und Empfangseinheit 56 der Basisstation 18 sind identisch ausgebildet. Es ist jedoch auch denkbar, dass die Sequenzen von Ultraschallsignalen der Sende- und Empfangseinheit 56 der Basisstation 18 und der Sende- und Empfangseinheit 48 des autonomen Arbeitsgeräts 10 verschieden und auf eine andere, einem Fachmann als sinnvoll erscheinende Weise ausgebildet sind.

Empfängt das Ultraschallempfangselement 52 der Sende- und Empfangseinheit 48 des autonomen Arbeitsgeräts 10 die definierte und eindeutige Sequenz von Ultraschallsignalen des Ultraschallelements 34 der Sende- und Empfangseinheit 56 der Basisstation 18 nicht, so befindet sich das autonome Arbeitsgerät 10 nicht in dem Nahbereich 16 der Basisstation 18. Das autonome Arbeitsgerät 10 startet eine Finderoutine und fährt in eine benachbarte Position, sendet erneut die definierte und eindeutige Sequenz von Ultraschallsignalen aus und wartet auf einen Empfang der definierten und eindeutigen Sequenz von Ultraschallsignalen der Sende- und Empfangseinheit 56 der Basisstation 18. Dieser Vorgang wird solange wiederholt, bis das Ultraschallempfangselement 52 der Sende- und Empfangseinheit 48 des autonomen Arbeitsgeräts 10 die Sequenz von Ultraschallsignalen der Sende- und Empfangseinheit 56 der Basisstation 18 empfängt.

Durch den Empfang der definierten und eindeutigen Sequenz von Ultraschallsignalen der Sende- und Empfangseinheit 56 der Basisstation 18 durch das Ultraschallempfangselement 52 der Sende- und Empfangseinheit 48 des autonomen Arbeitsgeräts 10 kann bestätigt werden, dass das autonome Arbeitsgerät 10 tatsächlich in dem berechneten Nahbereich 16 der Basisstation 18 positioniert ist und eine tatsächliche Position der Basisstation 18 relativ zu dem autonomen Arbeitsgerät 10 kann bestimmt werden.

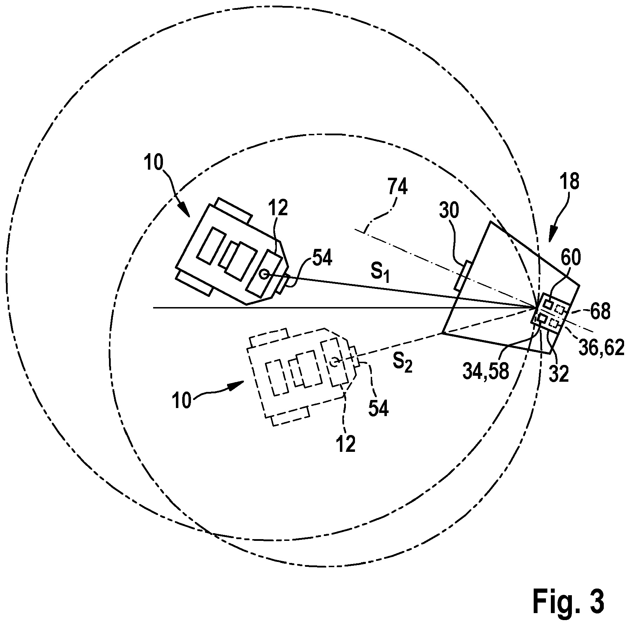

Durch eine Messung einer Laufzeit der Ultraschallsignale zwischen einem Aussenden und einem Empfangen der definierten und eindeutigen Sequenz von Ultraschallsignalen durch das Ultraschallelement 26 und das Ultraschallempfangselement 52 der Sende- und Empfangseinheit 48 des autonomen Arbeitsgeräts 10 in dem weiteren Verfahrensschritt 70 sowie durch die Kenntnis der Schallgeschwindigkeit von Schall in Luft kann eine tatsächliche Strecke s₁ zwischen dem autonomen Arbeitsgerät 10 und der Sende- und Empfangseinheit 56 der Basisstation 18 bestimmt werden. Dadurch sind sowohl eine Entfernung zwischen dem autonomen Arbeitsgerät 10 und der Basisstation 18 als auch die Position und die Orientierung des autonomen Arbeitsgeräts 10 relativ zu der Basisstation 18 bekannt. Um nun den Versatz d senkrecht zur Hauptachse 74 der Basisstation 18, der durch eine Ungenauigkeit der von der Wegerfassungseinheit 20 berechneten Position entsteht, ermitteln zu können, fährt das autonome Arbeitsgerät 10 in eine andere Position relativ zu der Basisstation 18 innerhalb des Nahbereichs 16 der Basisstation 18 (Figur 3, gestrichelt dargestellt). Diese andere Position des autonomen Arbeitsgeräts 10 kann einen Versatz, der unterschiedlich zum Versatz d sein kann, senkreckt zur Hauptachse 74 der Basisstation 18 aufweisen. Die andere Position des autonomen Arbeitsgeräts 10 wird mithilfe einer Inertialnavigation der Wegerfassungseinheit 20 berechnet.

In der anderen Position wird das oben beschriebene Verfahren zur Ermittlung der Entfernung s₂ zwischen dem autonomen Arbeitsgerät 10 und der Sende- und Empfangseinheit 56 der Basisstation 18 nochmals durchgeführt. Für die Ermittlung der Entfernung s₂ zwischen dem autonomen Arbeitsgerät 10 und der Sende- und Empfangseinheit 56 der Basisstation 18 ist eine geringe Änderung der Position des autonomen Arbeitsgeräts 10 ausreichend. Ein Schnittpunkt eines Kreises mit dem Radius s₁ um das autonome Arbeitsgerät 10 in der ersten Position und ein Schnittpunkt eines Kreises mit dem Radius s₂ um das autonome Arbeitsgerät 10 in der anderen Position, der vor dem autonomen Arbeitsgerät 10 liegt, kennzeichnet die Position des Ultraschallelements 34 der Sende- und Empfangseinheit 56 der Basisstation 18 (Figur 3). Um eine höhere Genauigkeit bei der Bestimmung der Basisstation 18 relativ zu dem autonomen Arbeitsgerät 10 erreichen zu können, können auch die Entfernungen zwischen dem autonomen Arbeitsgerät 10 und der Sende- und Empfangseinheit 56 der Basisstation 18 an mehr als zwei Positionen bestimmt werden. Die Messungen können durch eine Sensorfusion, beispielsweise mit dem von dem Kalman-Filter gebildeten Filterelement 46 der Recheneinheit 44 oder durch einen Bündelausgleich, kombiniert werden. Anhand der so bestimmten Position der Basisstation 18 wird nun ein Anfahrtspfad für das Andocken des autonomen Arbeitsgeräts 10 an der Basisstation 18 berechnet (Figur 4).

Die Sensorfusion zur Positionsbestimmung der Basisstation 18 wird während der Anfahrt des autonomen Arbeitsgeräts 10 zur Basisstation 18 weiter durchgeführt, sodass der Anfahrtspfad für das Andocken des autonomen Arbeitsgeräts 10 an der Basisstation 18 nachberechnet und gegebenenfalls korrigiert werden kann. Hierfür weist das Verfahren zur Kopplung des autonomen Arbeitsgeräts 10 mit der Ladeschnittstelle 30 der Basisstation 18 einen weiteren Verfahrensschritt 42 auf, in dem das autonome Arbeitsgerät 10 mithilfe der Sende- und/oder Empfangseinheit 24 des autonomen Arbeitsgeräts 10, die als Sende- und Empfangseinheit 48 ausgebildet ist, und mithilfe der Sende- und/oder Empfangseinheit 32 der Basisstation 18, die als Sende- und Empfangseinheit 56 ausgebildet ist, aus dem Nahbereich 16 der Basisstation 18 zu der Ladeschnittstelle 30 der Basisstation 18 geführt wird. Die Berechnung und Korrektur des Anfahrtspfads wird von der Recheneinheit 44 des autonomen Arbeitsgeräts 10 auf eine, einem Fachmann bekannte Weise berechnet.

Weisen die Sende- und Empfangseinheit 48 des autonomen Arbeitsgeräts 10 und die Sende- und Empfangseinheit 56 der Basisstation 18 anstatt des Ultraschallelements 26, 34 alternativ jeweils das bereits beschriebene UWB-Element 28, 36 auf, sendet das autonome Arbeitsgerät 10 in dem weiteren Verfahrensschritt 70', der zu einem Großteil dem bereits beschriebenen weiteren Verfahrensschritt 70 entspricht, einen UWB-Impuls aus. Empfängt das UWB- Empfangselement 68 der Basisstation 18 den UWB-Impuls des UWB-Elements 28 des autonomen Arbeitsgeräts 10, sendet das UWB-Element 36 der Basisstation 18 nach einer definierten Zeitspanne einen UWB-Impuls zurück, der von dem UWB-Empfangselement 66 des in dem Nahbereich 16 der Basisstation 18 angeordneten autonomen Arbeitsgeräts 10 empfangen wird. Durch eine Messung einer Laufzeit der UWB-Impulse zwischen einem Aussenden und einem Empfangen der UWB-Impulse durch das UWB-Element 28 und das UWB-Empfangselement 66 der Sende- und Empfangseinheit 48 des autonomen Arbeitsgeräts 10 in dem weiteren Verfahrensschritt 70' sowie durch die Kenntnis der definierten Zeitspanne zwischen einem Empfangen und einem Aussenden der UWB-Impulse durch das UWB-Element der Sende- und Empfangseinheit der Basisstation kann eine tatsächliche Strecke s₁ zwischen dem autonomen Arbeitsgerät 10 und der Sende- und Empfangseinheit 56 der Basisstation 18 bestimmt werden.

Alternativ ist es auch denkbar, dass die Sende- und/oder Empfangseinheit 24 des autonomen Arbeitsgeräts 10 und/oder die Sende- und/oder Empfangseinheit 32 der Basisstation 18 jeweils zwei oder mehr Ultraschallelemente 26, 34 oder UWB-Elemente 28, 36 umfassen, sodass durch eine Triangulation die relevanten Parameter zur Orientierung des autonomen Arbeitsgeräts 10 innerhalb des Bearbeitungsbereichs 14 ermittelt werden können.

Falls der falsche der beiden Schnittpunkte der Kreise mit den Radien s₁ und s₂ ausgewählt wurde, stellt sich dies spätestens bei der Anfahrt des autonomen Arbeitsgeräts 10 zu der Basisstation 18 heraus und der Anfahrtspfad für das Andocken des autonomen Arbeitsgeräts 10 an der Basisstation 18 wird von dem anderen Schnittpunkt aus neu berechnet und die Anfahrt des autonomen Arbeitsgeräts 10 zu der Basisstation 18 wird anhand dieses Anfahrtspfads durchgeführt. Werden mehr als zwei Messungen der Entfernungen zwischen dem autonomen Arbeitsgerät 10 und der Sende- und Empfangseinheit 56 der Basisstation 18 durchgeführt, wird die Wahl des falschen Schnittpunkts bereits bei der dritten Messung der Entfernungen zwischen dem autonomen Arbeitsgerät 10 und der Sende- und Empfangseinheit 56 der Basisstation 18 festgestellt, da sich die Distanz des autonomen Arbeitsgeräts 10 zu der Sende- und Empfangseinheit 56 der Basisstation 18 vergrößert.

## Patentansprüche

1. Autonomes Arbeitsgerät, insbesondere autonomer Rasenmäher, mit zumindest einer von einer Einfassungsdrahtorientierungsvorrichtung verschiedenen Orientierungsvorrichtung (12), die zu einer Orientierung innerhalb eines Bearbeitungsbereichs (14) vorgesehen ist, und mit zumindest einer Steuer- und/oder Regeleinheit (72) zu einer Ermittlung einer Fahrstrategie, wobei die zumindest eine Steuer- und/oder Regeleinheit (72) zumindest dazu vorgesehen ist, eine Ausrichtung relativ zu einer Basisstation (18) zu einem gezielten Andocken an eine Schnittstelle, insbesondere eine Ladeschnittstelle (30), der Basisstation (18) in Abhängigkeit von zumindest einer mittels der zumindest einen Orientierungsvorrichtung (12) erfassten Orientierungskenngröße zu ermitteln, **dadurch gekennzeichnet, dass** die zumindest eine Steuer- und/oder Regeleinheit (72) zumindest dazu vorgesehen ist, einen Versatz (d) relativ zu einer Hauptachse (74) der Basisstation (18) zu ermitteln, wobei die Hauptachse (74) der Basisstation (18) parallel zu einer Haupteinfahrtrichtung des autonomen Arbeitsgeräts zu einem Andocken an die Schnittstelle der Basisstation (18) angeordnet ist, wobei die Orientierungsvorrichtung (12) eine Sende- und/oder Empfangseinheit (24) umfasst, die zu einer Kommunikation zumindest mit der Basisstation (18) innerhalb eines Nahbereichs (16) der Basisstation (18) vorgesehen ist, wobei die zumindest eine Steuer- und/oder Regeleinheit (72) dazu vorgesehen ist, den Versatz (d) relativ zu der Hauptachse (74) der Basisstation (18) zumindest teilweise anhand zumindest einer von der Sende- und/oder Empfangseinheit (24) erfassten Information zu ermitteln.

2. Autonomes Arbeitsgerät nach Anspruch 1, **dadurch gekennzeichnet, dass** die zumindest eine Steuer- und/oder Regeleinheit (72) dazu vorgesehen ist, den Versatz (d) relativ zu einer Hauptachse (74) der Basisstation (18) zumindest teilweise durch eine Entfernungsmessung an zumindest zwei, voneinander beabstandet angeordneten Punkten zu ermitteln.

3. Autonomes Arbeitsgerät nach einem der Ansprüche 1 bis 2, **dadurch gekennzeichnet, dass** die Sende- und/oder Empfangseinheit (24) nach einem Erreichen des Nahbereichs (16) der Basisstation (18) zumindest zu einem Aussenden zumindest eines Signals vorgesehen ist, das dazu vorgesehen ist, ein Aussenden zumindest eines Antwortsignals durch die Basisstation (18) auszulösen.

4. Autonomes Arbeitsgerät nach einem der Ansprüche 1 bis 3, **dadurch gekennzeichnet, dass** die Sende- und/oder Empfangseinheit (24) zumindest ein Ultraschallelement (26) und/oder zumindest ein Ultra-Wide-Band-Element (28) zu einer Kommunikation zumindest mit der Basisstation (18) innerhalb des Nahbereichs (16) der Basisstation (18) umfasst.

5. Basisstation mit zumindest einer Schnittstelle, insbesondere einer Ladeschnittstelle (30), die mit einem autonomen Arbeitsgerät (10), insbesondere mit einem autonomen Rasenmäher, nach einem der Ansprüche 1 bis 4 koppelbar ausgebildet ist.

6. Basisstation nach Anspruch 5, **gekennzeichnet durch** eine Sende- und/oder Empfangseinheit (32), die zu einer Kommunikation zumindest mit dem autonomen Arbeitsgerät (10) vorgesehen ist und die bis zu einem Erkennen zumindest eines von der Sende- und/oder Empfangseinheit (24) des autonomen Arbeitsgeräts (10) ausgesendeten Signals in einem Empfangsmodus ist.

7. Basisstation nach Anspruch 6, **dadurch gekennzeichnet, dass** die Sende- und/oder Empfangseinheit (32) zumindest ein Ultraschallelement (34) und/oder zumindest ein Ultra-Wide-Band-Element (28) zu einer Kommunikation zumindest mit dem autonomen Arbeitsgerät (10) umfasst.

8. System mit zumindest einem autonomen Arbeitsgerät (10), insbesondere mit einem autonomen Rasenmäher, nach einem der Ansprüche 1 bis 4 und mit zumindest einer Basisstation (18) nach einem der Ansprüche 5 bis 7.

9. Verfahren zu einer Kopplung eines autonomen Arbeitsgeräts (10), insbesondere eines autonomen Rasenmähers, nach einem der Ansprüche 1 bis 4 mit einer Schnittstelle, insbesondere einer Ladeschnittstelle (30), einer Basisstation (18) nach einem der Ansprüche 5 bis 7, **gekennzeichnet durch** zumindest einen Verfahrensschritt (40), in dem mittels zumindest einer Steuer- und/oder Regeleinheit (72) in Abhängigkeit von zumindest einer von einer Einfassungsdahtorientierungsvorrichtung verschiedenen Orientierungsvorrichtung (12) erfassten Information eine Ausrichtung relativ zu einer Basisstation (18) zu einem gezielten Andocken an eine Ladeschnittstelle (30) der Basisstation (18) ermittelt wird.

10. Verfahren nach Anspruch 9, **gekennzeichnet durch** zumindest einen Verfahrensschritt (76), in dem ein Versatz (d) des autonomen Arbeitsgeräts (10) relativ zu einer Hauptachse (74) der Basisstation (18) ermittelt wird.

11. Verfahren nach einem der Ansprüche 9 bis 10, **gekennzeichnet durch** zumindest einen Verfahrensschritt (78), in dem eine Sende- und/oder Empfangseinheit (24) des autonomen Arbeitsgeräts (10) nach einem Erreichen eines Nahbereichs (16) der Basisstation (18) zumindest ein Signal aussendet, das dazu vorgesehen ist, ein Aussenden zumindest eines Antwortsignals durch eine Sende- und/oder Empfangseinheit (32) der Basisstation (18) nach einem Erkennen des zumindest einen Signals auszulösen.

## Claims

1. Autonomous working device, in particular autonomous lawnmower, comprising at least one orientation apparatus (12) which is different from a perimeter wire orientation apparatus and is provided for orientation within a processing region (14), and comprising at least one open-loop and/or closed-loop control unit (72) for determining a travel strategy, wherein the at least one open-loop and/or closed loop control unit (72) is provided at least for determining an alignment relative to a base station (18) for targeted docking to an interface, in particular a charging interface (30), of the base station (18) depending on at least one orientation characteristic variable which is detected by means of the at least one orientation apparatus (12), **characterized in that** the at least one open-loop and/or closed-loop control unit (72) is provided at least for determining an offset (d) relative to a main axis (74) of the base station (18), wherein the main axis (74) of the base station (18) is arranged parallel to a main entry direction of the autonomous working device for docking to the interface of the base station (18), wherein the orientation apparatus (12) comprises a transmitting and/or receiving unit (24) which is provided for communicating at least with the base station (18) in the vicinity (16) of the base station (18), wherein the at least one open-loop and/or closed-loop control unit (72) is provided for determining the offset (d) relative to the main axis (74) of the base station (18) at least partially with reference to at least one item of information which is detected by the transmitting and/or receiving unit (24).

2. Autonomous working device according to Claim 1, **characterized in that** the at least one open-loop and/or closed-loop control unit (72) is provided for determining the offset (d) relative to a main axis (74) of the base station (18) at least partially by way of a distance measurement at at least two points which are arranged at a distance from one another.

3. Autonomous working device according to either of Claims 1 and 2, **characterized in that** the transmitting and/or receiving unit (24), after reaching the vicinity (16) of the base station (18), is provided at least for emitting at least one signal which is provided for triggering emission of at least one response signal by the base station (18).

4. Autonomous working device according to one of Claims 1 to 3, **characterized in that** the transmitting and/or receiving unit (24) comprises at least one ultrasonic element (26) and/or at least one ultra-wideband element (28) for communicating at least with the base station (18) in the vicinity (16) of the base station (18).

5. Base station comprising at least one interface, in particular a charging interface (30), which is designed to be couplable to an autonomous working device (10), in particular to an autonomous lawnmower, according to one of Claims 1 to 4.

6. Base station according to Claim 5, **characterized by** a transmitting and/or receiving unit (32) which is provided for communicating at least with the autonomous working device (10) and which is in a receiving mode until at least one signal which is emitted by the transmitting and/or receiving unit (24) of the autonomous working device (10) is identified.

7. Base station according to Claim 6, **characterized in that** the transmitting and/or receiving unit (32) comprises at least one ultrasonic element (34) and/or at least one ultra-wideband element (28) for communicating at least with the autonomous working device (10).

8. System comprising at least one autonomous working device (10), in particular comprising an autonomous lawnmower, according to one of Claims 1 to 4 and comprising at least one base station (18) according to one of Claims 5 to 7.

9. Method for coupling an autonomous working device (10), in particular an autonomous lawnmower, according to one of Claims 1 to 4 to an interface, in particular a charging interface (30), of a base station (18) according to one of Claims 5 to 7, **characterized by** at least one method step (40) in which an alignment relative to a base station (18) for targeted docking to a charging interface (30) of the base station (18) is determined by means of at least one open-loop and/or closed-loop control unit (72) depending on at least one item of information which is detected by an orientation apparatus (12) which is different from a perimeter wire orientation apparatus.

10. Method according to Claim 9, **characterized by** at least one method step (76) in which an offset (d) of the autonomous working device (10) is determined relative to a main axis (74) of the base station (18).

11. Method according to either of Claims 9 and 10, **characterized by** at least one method step (78) in which a transmitting and/or receiving unit (24) of the autonomous working device (10), after reaching the vicinity (16) of the base station (18), emits at least one signal which is provided for triggering emission of at least one response signal by a transmitting and/or receiving unit (32) of the base station (18) after the at least one signal is identified.

## Revendications

1. Appareil de travail autonome, notamment tondeuse à gazon autonome, comprenant au moins un dispositif d'orientation (12) différent d'un dispositif d'orientation de fil de bordure, lequel est conçu pour une orientation à l'intérieur d'une zone de traitement (14), et comprenant au moins une unité de commande et/ou de régulation (72) destinée à une détermination d'une stratégie de déplacement, l'au moins une unité de commande et/ou de régulation (72) étant au moins conçue pour déterminer une orientation par rapport à une station de base (18) en vue d'un accostage ciblé au niveau d'une interface, notamment une interface de charge (30), de la station de base (18) en fonction d'au moins une grandeur caractéristique d'orientation acquise au moyen de l'au moins un dispositif d'orientation (12), **caractérisé en ce que** l'au moins une unité de commande et/ou de régulation (72) est au moins conçue pour déterminer un décalage (d) par rapport à un axe principal (74) de la station de base (18), l'axe principal (74) de la station de base (18) étant disposé en parallèle avec une direction d'entrée principale de l'appareil de travail autonome en vue d'un accostage au niveau de l'interface de la station de base (18), le dispositif d'orientation (12) comportant une unité d'émission et/ou de réception (24) qui est conçue pour une communication au moins avec la station de base (18) à l'intérieur d'une zone de proximité (16) de la station de base (18), l'au moins une unité de commande et/ou de régulation (72) étant conçue pour déterminer le décalage (d) par rapport à l'axe principal (74) de la station de base (18) au moins partiellement à l'aide d'au moins une information acquise par l'unité d'émission et/ou de réception (24).

2. Appareil de travail autonome selon la revendication 1, **caractérisé en ce que** l'au moins une unité de commande et/ou de régulation (72) est conçue pour déterminer le décalage (d) par rapport à un axe principal (74) de la station de base (18) au moins partiellement par une mesure de distance au niveau d'au moins deux points espacés l'un de l'autre.

3. Appareil de travail autonome selon l'une des revendications 1 et 2, **caractérisé en ce que** l'unité d'émission et/ou de réception (24) est conçue au moins pour une émission d'au moins un signal après avoir atteint la zone de proximité (16) de la station de base (18), lequel est conçu pour déclencher une émission d'au moins un signal de réponse par la station de base (18).

4. Appareil de travail autonome selon l'une des revendications 1 à 3, **caractérisé en ce que** l'unité d'émission et/ou de réception (24) comporte au moins un élément à ultrasons (26) et/ou au moins un élément à bande ultra-large (28) destiné à une communication au moins avec la station de base (18) dans la zone de proximité (16) de la station de base (18).

5. Station de base comprenant au moins une interface, notamment une interface de charge (30), qui est configurée pour pouvoir être accouplée avec un appareil de travail autonome (10), notamment avec une tondeuse à gazon autonome selon l'une des revendications 1 à 4.

6. Station de base selon la revendication 5, **caractérisée par** une unité d'émission et/ou de réception (32) qui est conçue pour une communication au moins avec l'appareil de travail autonome (10) et qui se trouve dans un mode de réception jusqu'à une reconnaissance d'au moins un signal émis par l'unité d'émission et/ou de réception (24) de l'appareil de travail autonome (10).

7. Station de base selon la revendication 6, **caractérisée en ce que** l'unité d'émission et/ou de réception (32) comporte au moins un élément à ultrasons (34) et/ou au moins un élément à bande ultra-large (28) destiné à une communication au moins avec l'appareil de travail autonome (10).

8. Système comprenant au moins un appareil de travail autonome (10), notamment une tondeuse à gazon autonome, selon l'une des revendications 1 à 4 et comprenant au moins une station de base (18) selon l'une des revendications 5 à 7.

9. Procédé pour un accouplement d'un appareil de travail autonome (10), notamment d'une tondeuse à gazon autonome, selon l'une des revendications 1 à 4 avec une interface, notamment une interface de charge (30), d'une station de base (18) selon l'une des revendications 5 à 7, **caractérisé par** au moins une étape de procédé (40) dans laquelle une orientation par rapport à une station de base (18) en vue d'un accostage ciblé au niveau d'une interface de charge (30) de la station de base (18) est déterminée au moyen d'au moins une unité de commande et/ou de régulation (72) en fonction d'au moins une information acquise par un dispositif d'orientation (12) différent d'un dispositif d'orientation de fil de bordure.

10. Procédé selon la revendication 9, **caractérisé par** au moins une étape de procédé (76) dans laquelle un décalage (d) de l'appareil de travail autonome (10) par rapport à un axe principal (74) de la station de base (18) est déterminé.

11. Procédé selon l'une des revendications 9 et 10, **caractérisé par** au moins une étape de procédé (78) dans laquelle une unité d'émission et/ou de réception (24) de l'appareil de travail autonome (10) émet au moins un signal après avoir atteint une zone de proximité (16) de la station de base (18), lequel est conçu pour déclencher une émission d'au moins un signal de réponse par une unité d'émission et/ou de réception (32) de la station de base (18) après une reconnaissance de l'au moins un signal.
